# FASCICULE DE BREVET EUROPEEN

(11) **EP 4 532 239 B1**
(45) Date de publication et mention de la délivrance du brevet: **01.07.2026**
(21) Numéro de dépôt: 23725998.1
(22) Date de dépôt: 09.05.2023
(51) Int. Cl.: B60K 11/08

(54) **CASSETTE POUR UN DISPOSITIF DE RÉGULATION DE LA CIRCULATION D'UN FLUX D'AIR D'UN VEHICULE AUTOMOBILE ET VOLET POUR UNE TELLE CASSETTE**
KASSETTE FÜR EINE VORRICHTUNG ZUR STEUERUNG DER ZIRKULATION EINES LUFTSTROMS EINES KRAFTFAHRZEUGS UND VERSCHLUSS FÜR SOLCH EINE KASSETTE
CASSETTE FOR A DEVICE FOR CONTROLLING THE CIRCULATION OF AN AIR FLOW OF A MOTOR VEHICLE AND SHUTTER FOR SUCH A CASSETTE

(30) Priorité: 24.05.2022 FR 2204988
(43) Date de publication de la demande: 09.04.2025
(73) Titulaire: Renault s.a.s, 92100 Boulogne Billancourt (FR)
(72) Inventeur: DIMEY, Xavier, 78280 GUYANCOURT (FR); SOLTOIAN, Serghei, 78280 GUYANCOURT (FR); VIEILLE, Katia, 78280 GUYANCOURT (FR)
(86) Numéro de dépôt international: PCT/EP2023/062244
(87) Numéro de publication internationale: WO 2023/227362

(56) Documents cités:
- EP-A1- 1 522 448
- EP-A1- 3 736 156
- DE-A1- 102013 200 939
- FR-A1- 3 070 633
- US-A1- 2020 031 218

## Description

L'invention concerne une cassette comprenant des volets, notamment des volets mobiles, pour un dispositif de régulation de la circulation d'un flux d'air d'un véhicule, par exemple disposé au niveau d'une calandre ou d'une bouche d'aération d'un véhicule automobile, ainsi que ledit dispositif. L'invention concerne également une installation de circulation et/ou de traitement thermique d'un flux d'air, par exemple une installation de refroidissement d'un fluide caloporteur ou une installation de ventilation, de chauffage et/ou de climatisation, comprenant un tel dispositif. L'invention concerne enfin un véhicule automobile équipé d'une installation et/ou d'un dispositif et/ou d'une cassette selon l'invention.

Les véhicules automobiles comprennent une calandre montée sur une extrémité avant du véhicule permettant la circulation d'un flux d'air extérieur vers au moins un module de refroidissement d'au moins un fluide destiné à circuler au travers notamment d'un dispositif de chauffage, tel qu'un radiateur d'une installation de ventilation, de chauffage et/ou de climatisation du véhicule, autrement appelée installation HVAC, pour l'acronyme anglais « Heating, Ventilating and Air-Conditioning ». Un tel module de refroidissement comprend habituellement un assemblage d'échangeurs thermiques traversés par l'air ambiant afin de refroidir au moins un fluide, notamment un fluide caloporteur destiné au refroidissement d'un moteur à combustion ou un fluide réfrigérant destiné à l'HVAC.

Il est connu d'équiper, au niveau du trajet d'admission de l'air, un dispositif de réglage de la circulation du flux d'air qui comprend une cassette dans laquelle une pluralité de volets mobiles sont montés en rangées sur un cadre et pilotés afin de permettre sélectivement de bloquer et/ou de réguler le flux d'air en amont du module de refroidissement. Un inconvénient de telles cassettes de volets pilotés réside dans le fait qu'elles nécessitent au moins deux types de volets distincts, présentant des dimensions différentes, voire plus lorsque le dispositif et/ou le cadre présente(nt) une architecture plus complexe impliquant une variation de dimension, particulièrement de longueur, d'une rangée de volet à une autre. Notamment, de telles cassettes comprennent un volet moteur, plus long, couplé à un arbre d'actionneur, et des volets entrainés à rotation par une biellette en relation mécanique avec ledit volet moteur, le volet moteur et les volets entraînés Il est alors nécessaire de multiplier les références de volets d'un modèle de cassette, ou de dispositif de régulation de la circulation d'un flux d'air, à un autre, ce qui s'accompagne de coûts non négligeables aussi bien pour le développement de telles pièces que pour leur fabrication.

Un exemple de cassette pour dispositif de régulation de la circulation d'un flux d'air d'un véhicule, comprenant un cadre et une pluralité de volets mobiles disposés sur ledit cadre, et au moins deux volets adjacents étant rapportés l'un relativement à l'autre et disposés à la suite l'un de l'autre le long d'un premier axe, est par ailleurs fourni par le document EP1522448A1.

La présente invention s'inscrit dans ce contexte et vise à résoudre les inconvénients susnommés en proposant une cassette équipée de volets permettant un assemblage modulable, notamment en longueur et/ou le long d'une direction d'extension desdits volets, d'assemblage simple et pouvant être réalisée à faible coût de sorte à être adaptée à une grande variété de modules de refroidissement.

L'invention concerne une cassette pour dispositif de régulation de la circulation d'un flux d'air d'un véhicule, la cassette comprenant un cadre et une pluralité de volets mobiles disposés sur ledit cadre, au moins deux volets adjacents étant rapportés l'un relativement à l'autre et disposés à la suite l'un de l'autre le long d'un premier axe. Lesdits deux volets comprenent chacun un corps présentant, le long du premier axe, une première portion extrémale et une deuxième portion extrêmale opposées , ladite cassette étant caractérisée en ce que lesdites portions extrémales opposées comprennent respectivement un premier organe de couplage et un deuxième organe de couplage au moins en partie complémentaires de forme, lesdites portions extrêmales étant configurées de sorte que les corps des deux volets adjacents sont reliés l'un à l'autre de manière solidaire réversible au moins par couplage du premier organe de couplage de l'un des deux volets adjacents avec le deuxième organe de couplage de l'autre desdits volets au niveau d'une zone de couplage de sorte qu'un mouvement, notamment une rotation autour du premier axe, exercé sur l'un quelconque desdits deux volets est transmis à l'autre desdits volets.

Notamment, le premier organe de couplage et le deuxième organe de couplage d'au moins l'un des deux volets adjacents peuvent être centrés sur le premier axe.

Notamment, au sein des deux volets adjacents, l'un du premier organe de couplage ou du deuxième organe de couplage peut présenter une forme cylindrique comprenant au moins un moyen de butée et l'autre du premier organe de couplage ou du deuxième organe de couplage peut présenter une forme cylindrique creuse apte à recevoir l'un du premier organe de couplage ou du deuxième organe de couplage, une surface intérieure de ladite forme cylindrique creuse comprenant un élément de butée, complémentaire du moyen de butée, configuré pour relier les deux volets adjacents entre eux de manière solidaire de sorte qu'un mouvement, notamment une rotation autour du premier axe, exercé sur l'un quelconque desdits deux volets est transmis à l'autre desdits volets.

Le cadre peut comprendre, en outre, au moins un bras configuré pour coopérer avec le premier organe de couplage et/ou avec le deuxième organe de couplage compris dans la zone de couplage reliant les deux volets adjacents. Notamment, au moins l'un du premier organe de couplage et/ou du deuxième organe de couplage compris dans la zone de couplage peut comprendre un rebord configuré pour entrer en butée de l'au moins un bras le long d'au moins un sens de la direction définie par le premier axe.

La première portion extrêmale de chacun des deux volets adjacents peut comprendre, en outre, au moins un premier organe de transmission d'un mouvement et la deuxième portion extrêmale de chacun des deux volets adjacents peut comprendre, en outre, au moins un deuxième organe de transmission d'un mouvement, au moins le premier organe de transmission de l'un des deux volets adjacents étant configuré pour coopérer avec le deuxième organe de transmission de l'autre desdits deux volets au niveau de la zone de couplage.

L'invention concerne également un dispositif de régulation de la circulation d'un flux d'air d'un véhicule comprenant une cassette telle qu'exposée précédemment et au moins un moyen de réglage de l'admission du flux d'air configuré pour déplacer, notamment par rotation autour du premier axe, au moins l'un des deux volets adjacents.

L'invention concerne encore un volet pour une cassette ou pour un dispositif de régulation de la circulation d'un flux d'air d'un véhicule selon l'invention. Un tel volet comprend un corps s'étendant le long d'un premier axe et présentant le long dudit axe, une première portion extrémale et une deuxième portion extrêmale opposées, la première portion extrêmale comprenant un premier organe de couplage, configuré pour lier le corps à un volet adjacent disposé le long du premier axe de manière solidaire réversible, la deuxième portion extrêmale comprenant un deuxième organe de couplage au moins en partie complémentaire de forme du premier organe de couplage, configuré pour coopérer avec un premier organe de couplage d'un volet adjacent disposé le long du premier axe, le premier organe de couplage et/ou le deuxième organe de couplage étant notamment centrés sur le premier axe.

Notamment, la première portion extrêmale peut comprendre, en outre, au moins un premier organe de transmission d'un mouvement et la deuxième portion extrêmale peut comprendre, en outre, au moins un deuxième organe de transmission, le premier organe de transmission étant configuré pour coopérer avec un deuxième organe de transmission d'un volet adjacent disposé le long du premier axe et le deuxième organe de transmission étant configuré pour coopérer avec un premier organe de transmission d'un volet adjacent disposé le long du premier axe, le premier organe de transmission et le deuxième organe de transmission étant centrés sur un deuxième axe, distinct du premier axe.

L'invention s'étend à une installation de circulation et/ou de traitement thermique d'un flux d'air comprenant un dispositif de régulation de la circulation d'un flux d'air et/ou au moins une cassette et/ou au moins un volet tels qu'exposés plus haut.

Notamment, une telle installation peut comprendre plusieurs rangées de volets, notamment plusieurs rangées horizontales de volets, au moins un volet d'une rangée de volets pouvant être de géométrie différente à celle d'au moins un autre volet de la rangée ou d'au moins un volet d'une rangée adjacente.

L'invention concerne enfin un véhicule automobile comprenant un dispositif de régulation de la circulation d'un flux d'air et/ou une installation selon l'invention.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une représentation schématique d'une face avant d'un véhicule selon un mode de réalisation comprenant une installation et un dispositif de régulation selon l'invention.
La figure 2 est une vue simplifiée du dispositif de régulation comprenant une cassette.
La figure 3 est une vue schématique en perspective d'une cassette comprenant une pluralité de volets selon l'invention.
La figure 4 est une vue schématique de face de la cassette comprenant une pluralité de volets selon l'invention.
La figure 5 est une représentation schématique d'un exemple de réalisation d'un volet selon un premier mode de réalisation.
La figure 6 est une représentation schématique d'un exemple d'organe de couplage d'un volet.
La figure 7 est une représentation schématique d'un exemple d'organe de couplage d'un volet.
La figure 8 est une représentation schématique d'un exemple de réalisation d'un volet selon un deuxième mode de réalisation.
La figure 9 est une représentation schématique du volet selon le deuxième mode de réalisation lorsqu'il coopère avec un volet adjacent.
La figure 10 est une représentation schématique d'exemples de réalisation du volet selon le deuxième mode de réalisation.

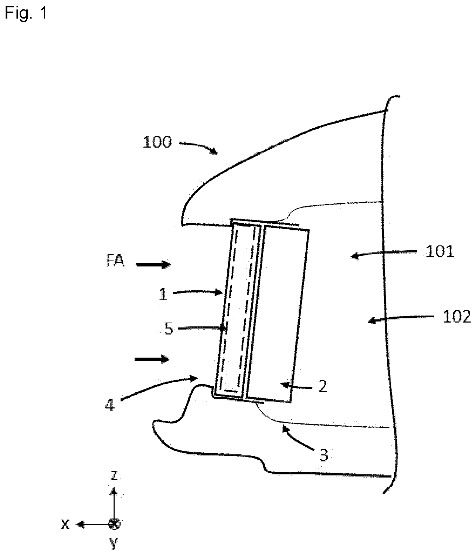

La figure 1 illustre schématiquement un exemple de réalisation d'un véhicule 100, notamment un véhicule automobile équipé d'un module de refroidissement 101, lequel peut être intégré pour tout ou partie à une installation de ventilation, de chauffage et/ou de climatisation, aussi qualifiée de HVAC, et/ou à une installation de refroidissement du moteur. Le module de refroidissement 101 comprend notamment au moins un échangeur thermique 2 configuré pour mettre en œuvre un échange thermique avec un flux d'air FA extérieur le traversant selon les besoins établis selon la phase de fonctionnement du véhicule. Dans l'ensemble de la description ci-après, le module de refroidissement 101 est décrit comme comprenant un seul échangeur thermique 2, il est néanmoins entendu que la présente invention s'étend à un module de refroidissement comprenant une pluralité d'échangeurs thermiques 2.

L'installation 102 comprend un dispositif de régulation 1 de la circulation du flux d'air FA extérieur, notamment à commande électrique, et au moins l'échangeur thermique 2 pouvant être configuré pour refroidir ou chauffer ledit flux d'air FA. L'installation 102 comprend, en outre, un boîtier 3 formant un circuit de distribution du flux d'air FA extérieur dans lequel sont disposés le dispositif de régulation 1 et l'échangeur thermique 2. Le boîtier 3 s'ouvre sur une calandre 4 du véhicule 100, notamment en face avant du véhicule 100, par laquelle l'installation est alimentée en flux d'air FA extérieur, le dispositif de régulation 1 étant, par exemple, disposé en amont de l'échangeur thermique 2 selon le sens de circulation du flux d'air FA extérieur.

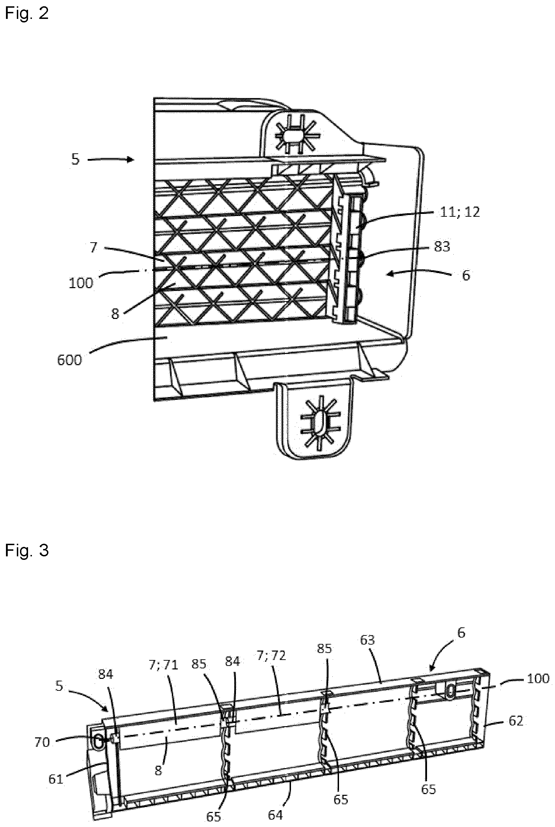

Les figures 2 à 10 illustrent plus en détail différents exemples et modes de réalisation du dispositif de régulation 1 selon l'invention. En référence aux orientations et directions définies précédemment, la direction longitudinale est représentée par l'axe Ox et correspond à une direction d'avancement du véhicule tandis que les axes Oy et Oz représentent respectivement les directions verticale et transversale. Ces axes définissent ensemble un repère Oxyz représenté sur les figures le nécessitant. Également, le sens de circulation du flux d'air extérieur est schématiquement représenté par des flèches. Enfin, il est entendu que les termes « premier », « deuxième » ont vocation à distinguer des éléments similaires et non à définir une hiérarchie desdits éléments.

De manière générale, le dispositif de régulation 1 comporte une cassette 5 qui comprend un cadre 6 et une pluralité de volets 7 disposés sur ledit cadre 6 de sorte à être mobiles relativement à celui-ci, c'est-à-dire de sorte à pouvoir être déplacé entre au moins deux positions distinctes, tel que davantage exposé ci-après. Également, de tels volets 7 sont rapportés et amovibles relativement au cadre 6. En outre, le dispositif comprend un moyen de réglage 11 de l'admission du flux d'air FA configuré pour déplacer tout ou partie des volets 7 de la cassette 5 de sorte à réguler ledit flux. Le moyen de réglage 11 comprend notamment au moins un moyen d'entrainement 12 d'au moins un volet de la pluralité de volets 7 mobiles, lequel peut, notamment, être actionné par commande électrique.

Selon un exemple de réalisation non limitatif, le cadre 6 peut comprendre au moins un premier flanc 61, un deuxième flanc 62, un troisième flanc 63 et un quatrième flanc 64. Les premier flanc 61 et deuxième flanc 62 sont opposés l'un à l'autre et sont reliés entre eux par le troisième flanc 63 et le quatrième flanc 64. Dans l'exemple illustré, le cadre 6, notamment les flancs 61, 62, 63, 64 du cadre 6, peut ainsi présenter, de manière non limitative, une forme continue sensiblement parallélépipédique définissant un volume interne 600 du dispositif de régulation dans lequel s'étend la pluralité de volets 7. En particulier, au moins deux flancs opposés du cadre 6 peuvent être configurés pour porter le moyen de réglage 11. En l'espèce il s'agit du premier flanc 61 et du deuxième flanc 62.

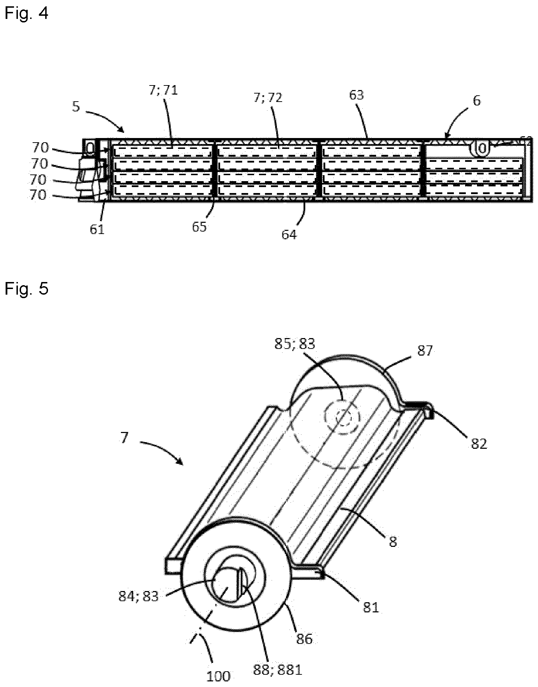

De manière optionnelle, tel qu'illustré aux figures 3 et 4, le cadre 6 peut, en outre, comprendre au moins un ou plusieurs bras 65 de support configuré(s) pour coopérer avec au moins un volet 7 de la pluralité de volets 7. De manière préférentielles, le cadre 6 peut comprendre une pluralité de bras 65 de support répartis dans le volume interne 600. Les bras s'étendent entre deux flancs opposés, ici entre le troisième flanc 63 et le quatrième flanc 64.

La cassette 5 comprend une pluralité de volets 7 mobiles. Particulièrement, selon l'invention, la cassette 5 comprend au moins deux volets 71, 72 adjacents disposés à la suite l'un de l'autre le long d'un premier axe 100 et configurés pour coopérer entre eux de manière solidaire réversible de sorte qu'un mouvement exercé sur l'un quelconque desdits deux volets 71, 72 est transmis à l'autre desdits volets. Notamment, un mouvement considéré est un mouvement de rotation autour du premier axe 100. Lesdits volets sont rapportés et amovibles l'un relativement à l'autre, de sorte que leur liaison est réversible. On entend ainsi par des volets 7 « adjacents », des volets 7 disposés l'un à côté de l'autre, notamment en coopération directe l'un avec l'autre, le long du premier axe 100. On entend par « solidaire » que, lorsque l'un desdits deux volets 7 est piloté afin d'être déplacé, ici selon un mouvement de rotation, l'autre desdits volet est entraîné, par exemple de manière à effectuer un mouvement identique de manière synchronisée. Autrement dit, les volets 7 liés solidairement les uns aux autres le long de la direction définie par le premier axe 100 sont déplacés concomitamment relativement au cadre 6 mais sont immobiles l'une relativement à l'autre. Une telle liaison, tel que davantage exposé ci-après, est réversible dans un contexte d'assemblage ou de désassemblage de la cassette 5. Un tel principe permet d'obtenir une cassette 5 modulable dans laquelle une pluralité de volets 7 peuvent être empilés le long du premier axe 100 selon le besoin, par exemple de sorte à être adaptés à une dimension du cadre 6 définie le long de ce même axe, ici notamment une longueur comprise entre le premier flanc 61 et le deuxième flanc 62, opposés. La présente invention permet ainsi avantageusement de démultiplier le nombre de volets empilés le long de la direction définie par le premier axe selon le besoin, sans qu'il soit nécessaire de développer de nouvelles références.

En outre, de manière optionnelle, la cassette 5 peut comprendre une ou plusieurs rangée(s) 70 comprenant chacune un ou plusieurs volets 7. Par exemple, de telles rangées 70 peuvent s'étendre le long d'une direction parallèle au premier axe 100 et être disposées les unes à côté des autres le long d'une direction transversale au premier axe 100, notamment orthogonale à celui-ci. Par exemple, une même rangée peut comprendre un unique volet tel que classiquement connu de l'Etat de l'art ou, alternativement, au moins deux volets 7 adjacents disposés à la suite l'un de l'autre le long d'un axe parallèle au premier axe 100 selon l'invention.

A des fins de clarté, la description ci-après est faite en référence à deux volets 7 adjacents particuliers de la pluralité de volet, il est néanmoins entendu que l'ensemble de la description s'applique, *mutatis mutandis* à tout ou partie des volets 7 de la pluralité de volets 7 de la cassette 5. Par ailleurs, la présente invention s'étend à un volet configuré pour être utilisé dans une cassette 5 selon l'invention, c'est-à-dire un volet configuré pour être empilé avec un ou plusieurs volets 7 distincts le long du premier axe 100. Aussi, l'ensemble de la description ci-après s'applique à un tel volet.

Tel qu'illustré schématiquement aux figures 3 et 5, les deux volets 7 adjacents présentent une structure allongée. Ils comprennent chacun un corps 8 présentant, le long du premier axe 100, une première portion extrêmale 81 et une deuxième portion extrêmale 82 opposées. Le corps 8 des volets 7 peut comprendre une ou plusieurs lames montées sur des pivots 83 centrés sur le premier axe 100. Par exemple, au moins l'un des pivots 83 peut être monté sur l'un des flancs du cadre 6 et/ou sur l'un des bras 65 et/ou sur un volet distinct, tel qu'exposé ci-après. Les bras 65 peuvent alors s'étendre transversalement, voire orthogonalement, au premier axe 100 et porter le pivot 83 d'au moins l'un des deux volets 7 adjacents. Le corps 8 peut présenter une forme plane ou sensiblement plane. Alternativement, le corps 8 peut présenter une forme sensiblement courbée.

Au moins les deux volets 7 adjacents sont ainsi montés mobiles, notamment pivotants, par exemple autour du premier axe 100, relativement au cadre 6 afin d'être déplacés entre une première position et une deuxième position. Le moyen d'entraînement 12 est apte à engager par entraînement tout ou partie de la pluralité de volets 7 afin de les déplacer sélectivement entre la première position et la deuxième position.

A titre d'exemple non limitatif, le moyen d'entraînement 12 peut comprendre un arbre d'entraînement et/ou un actionneur, tel qu'un moteur ou tout autre dispositif électromécanique, non représenté.

Dans la première position, les volets 7 restreignent le passage du flux d'air extérieur à travers le cadre 6, par exemple au travers de la calandre du véhicule, tandis que dans la deuxième position, lesdits volets 7 permettent la circulation du flux d'air FA à travers le cadre 6, et donc la calandre du véhicule, c'est-à-dire vers l'échangeur thermique 2. Autrement dit, lorsque les volets 7 sont déplacés dans la première position, le dispositif de régulation 1 est dans une configuration « fermée » prévenant l'entrée du flux d'air FA dans l'installation. A l'inverse, lorsque les volets 7 sont déplacés dans la deuxième position, le dispositif de régulation 1 est dans une configuration « ouverte » permettant la circulation du flux d'air FA au sein de l'installation 102, notamment au travers du dispositif de régulation 1 et de l'échangeur thermique 2. Il est entendu que, de manière optionnelle, le dispositif de régulation 1 peut également être configuré afin de mettre en œuvre une ou plusieurs configuration(s) « intermédiaire(s) » afin d'assurer la circulation d'un flux d'air FA extérieur réduit par rapport à la configuration ouverte, notamment en fonction des besoins de l'installation ou du véhicule. Dans de telles configurations, au moins une partie des volets 7 de la pluralité de volets 7 peut être déplacée dans une position intermédiaire comprise entre la première position et la deuxième position.

Tel qu'exposé plus haut, au moins les deux volets 71, 72 adjacents sont configurés pour coopérer entre eux de sorte qu'un mouvement exercé sur l'un quelconque desdits deux volets est transmis à l'autre desdits volets. A cette fin, la première portion extrêmale 81 et la deuxième portion extrêmale 82 du volet peuvent être réalisées selon différents modes de réalisation.

Selon un premier mode de réalisation, illustré aux figures 4 à 7, la première portion extrêmale 81 comprend un premier organe de couplage 84 et la deuxième portion extrêmale 82 comprend un deuxième organe de couplage 85 au moins en partie complémentaire de forme du premier organe de couplage 84. Les organes de couplage au sein d'un même volet mais également de l'un des deux volets à l'autre sont complémentaires de forme, de sorte que lesdits deux volets puissent être liés l'un à l'autre sans contrainte d'ordre. Le premier organe de couplage 84 et le deuxième organe de couplage 85 sont particulièrement configurés de sorte à permettre de relier les corps 8 des deux volets 7 adjacents l'un à l'autre par couplage réversible du premier organe de couplage 84 de l'un des deux volets 7 adjacents avec le deuxième organe de couplage 85 de l'autre desdits volets 7 au niveau d'une zone de couplage. On entend par « zone de couplage » une zone de liaison réversible entre un premier organe de couplage 84 d'un volet selon l'invention et un deuxième organe de couplage 85 d'un volet distinct, adjacent audit volet le long de la direction définie par le premier axe 100. Par exemple, au sein de la cassette 5, tout ou partie des volets 7 de la pluralité de volets 7 peut comprendre au moins une zone de couplage, notamment une zone de couplage ou deux zones de couplage selon que le volet considéré coopère avec un ou plusieurs volets 7 selon l'invention. Autrement dit, chaque volet selon l'invention est apte à être lié de manière réversible à deux volets distincts selon l'invention par l'intermédiaire du premier organe de couplage 84, d'une part, et du deuxième organe de couplage 85, d'autre part, de sorte à former un empilement le long du premier axe 100.

Le premier organe de couplage 84 et le deuxième organe de couplage 85 d'au moins l'un des deux volets 7 adjacents sont traversés par le premier axe 100. Notamment, ils sont centrés sur le premier axe 100. Le premier organe de couplage 84 et le deuxième organe de couplage 85 peuvent alors être au moins en partie confondus avec les pivots 83 du volet considéré. Particulièrement, le premier organe de couplage 84 et le deuxième organe de couplage 85 des deux volets 7 adjacents sont centrés sur le premier axe 100 lorsque lesdits volets sont assemblés ensemble, c'est-à-dire reliés l'un à l'autre au niveau de la zone de couplage. Les organes de couplages propres aux deux volets 7 adjacents sont alors disposés de manière alignée le long du premier axe 100. Le premier organe de couplage 84 peut être arrangé dans la première portion extrêmale 81 au niveau d'une première plaque 86 tandis que le deuxième organe de couplage 85 est arrangé sur une deuxième plaque 87. La première plaque 86 et la deuxième plaque 87 sont reliées au corps 8 et délimitent celui-ci le long de la direction définie par le premier axe 100.

Le volet selon l'invention peut être réalisé afin que l'ensemble formé par le premier organe de couplage 84, le corps 8 et le deuxième organe de couplage 85 est venu de matière. Autrement dit, le premier organe de couplage 84, le corps 8 et le deuxième organe de couplage 85 forment un ensemble monobloc, les organes de couplage ne pouvant être dissociés du corps 8 du volet considéré sans résulter en la dégradation, voire la destruction de celui-ci. Par exemple, le volet peut être réalisé en matière(s) plastique(s) renforcée(s), notamment avec toute sorte de fibres à des pourcentages de charge pouvant aller jusqu'à 50%.

Les premiers organes de couplage 84 d'au moins les deux volets 71, 72 adjacents présentent, de manière préférentielle, des formes et/ou dimensions identiques. Egalement, les deuxièmes organes de couplage 85 d'au moins les deux volets adjacents présentent, de manière préférentielle, des formes et/ou dimensions identiques de sorte que lesdits volets peuvent être liés l'un à l'autre sans contrainte d'ordre particulier.

Le premier organe de couplage 84 peut présenter une forme cylindrique comprenant au moins un moyen de butée 88. Le deuxième organe de couplage 85 peut présenter une forme cylindrique creuse apte à recevoir le premier organe de couplage 84. Une surface intérieure de ladite forme cylindrique creuse comprend un élément de butée, complémentaire du moyen de butée 88, non représenté. Le moyen de butée 88 et l'élément de butée sont avantageusement configurés pour relier les deux volets 7 adjacents entre eux de manière solidaire de sorte qu'un mouvement, notamment une rotation autour du premier axe 100, exercé sur l'un quelconque desdits deux volets 7 est transmis à l'autre desdits volets 7. En ce sens, l'élément de butée entrave le déplacement du moyen de butée 88 et inversement le long d'une trajectoire effectuée par le volet lorsque celui-ci est mis en mouvement. Si l'un des volets 71,72 est déplacé, l'un de l'élément de butée ou du moyen de butée exerce un effort sur l'autre de manière à entraîner l'autre des volets 71, 72. De la sorte les volets 71, 72 ne sont pas déplacés l'un relativement à l'autre. Il est entendu que la forme du premier organe de couplage 84 et du deuxième organe de couplage 85 peut être inversée.

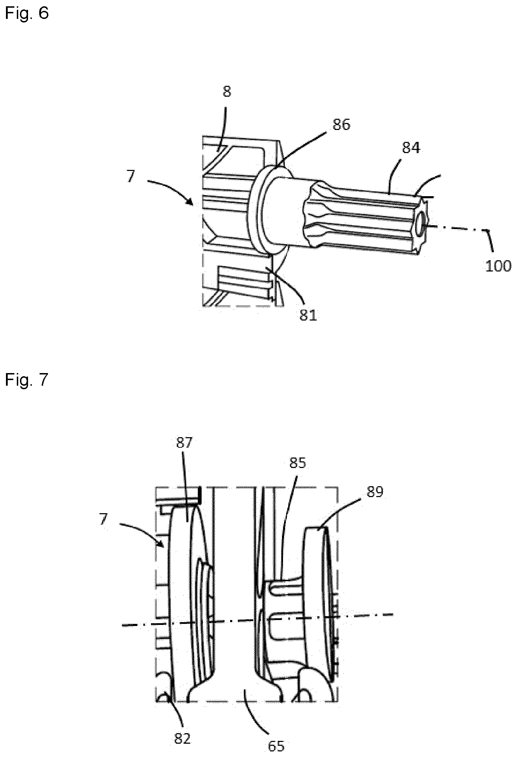

Selon un exemple de réalisation, illustré à la figure 6, le premier organe de couplage 84 peut présenter un profil cruciforme, en étoile, ou toute autre forme similaire, le moyen de butée 88 étant formé par au moins une branche dudit profil. On entend ici par « profil » la forme de l'organe dans un plan orthogonal au premier axe 100. Par exemple, ledit profil peut être centré sur le premier axe 100. La surface intérieure de la forme cylindrique creuse du deuxième organe de couplage 85 peut s'inscrire dans un profil de forme au moins en partie complémentaire du profil du premier organe de couplage 84, ladite surface intérieure comprenant l'élément de butée, complémentaire du moyen de butée 88, par exemple ici l'une des branches.

Alternativement ou en combinaison, le moyen de butée 88 peut être un méplat 881 compris dans le premier organe de couplage 84, tel que visible à la figure 5. La surface intérieure de la forme cylindrique creuse du deuxième organe de couplage 85 peut alors s'inscrire dans un profil de forme au moins en partie complémentaire du profil du premier organe de butée, notamment complémentaire de la partie du moyen de butée 88 formée par le méplat 881.

De manière avantageuse, tel qu'illustré à la figure 7, l'au moins un bras 65, ou l'un des bras 65, du cadre 6 peut être configuré pour coopérer avec l'au moins une zone de couplage reliant les deux volets 7 adjacents. Notamment, l'au moins un bras 65 est configuré pour coopérer avec le premier organe de couplage 84 et/ou avec le deuxième organe de couplage 85 compris dans la zone de couplage reliant les deux volets 7 adjacents. Par exemple, le bras 65 peut comprendre un renfoncement ou une ouverture configurée pour recevoir le premier organe de couplage 84 et/ou avec le deuxième organe de couplage. Lorsque le volet considéré comprend deux zones de couplage, tel qu'exposé plus haut, la cassette 5 peut être configurée de sorte qu'une pluralité de bras 65 du corps 8 coopèrent avec un même volet, chacun au niveau d'une zone de couplage distincte.

De manière optionnelle, afin de limiter, voire prévenir, un déplacement d'au moins d'un des deux volets 7 adjacents le long du premier axe 100, au moins l'un du premier organe de couplage 84 et/ou du deuxième organe de couplage 85 compris dans la zone de couplage comprend un rebord 89. Le rebord 89 est configuré pour entrer en butée de l'au moins un bras 65 le long d'au moins un sens de la direction définie par le premier axe 100. Le rebord 89 s'étend transversalement, par exemple orthogonalement, au premier axe 100. Par exemple, le rebord 89 peut être compris dans le deuxième organe de couplage 85, notamment au niveau d'une extrémité libre de celui-ci. Selon un exemple de réalisation non limitatif, le rebord 89 peut présenter la forme d'une bague bordant tout ou partie d'un contour d'une surface extérieure de la forme creuse du deuxième organe de couplage 85 apte à recevoir un premier organe de couplage 84. Alternativement, le rebord 89 peut présenter la forme d'une saillie s'étendant radialement relativement à un axe sur lequel est centré le deuxième organe de couplage et disposé sur une partie seulement du contour de la surface extérieure de la forme creuse du deuxième organe de couplage 85.

Alternativement ou en combinaison, un tel rebord 89 peut être compris dans le premier organe de couplage 84, par exemple au niveau d'une base de la forme cylindrique, aux abords de la première plaque 86 et à distance non nulle d'une extrémité libre du premier organe de couplage 84. En outre, les bras 65 peuvent alors assurer, par l'intermédiaire du rebord 89, le positionnement de chaque volet 7 le long de la direction définie par le premier axe 100 afin de permettre le maintien de l'interconnexion minimale nécessaire à la transmission de l'entrainement en rotation puisqu'une reprise des efforts dus à la pression d'air est présente au niveau des bras 65, principalement lorsque les volets 7 sont déplacés dans la première position, c'est-à-dire que le dispositif de régulation 1 est dans la configuration « fermée » prévenant l'entrée du flux d'air FA dans l'installation.

Ainsi, dans la cassette 5 selon l'invention, lorsqu'un mouvement, notamment de rotation, est exercé sur l'un des deux volets 71, 72 adjacents reliés, ledit mouvement est transmis à l'autre desdits volets 71, 72 par l'intermédiaire des organes de couplage 84, 85 qui leurs sont propres compris dans la zone de couplage. Par exemple, dans l'exemple illustré à la figure 3 ou 4, un premier volet 71 est entraîné par le moyen d'entraînement 12 et est relié à un deuxième volet 72. Un mouvement de rotation autour du premier axe 100 peut être imposé au premier volet 71 par le moyen d'entraînement 12, par exemple au niveau de l'un des pivots et/ou du premier organe de couplage 84. Le premier volet 71 pivote autour du premier axe 100 et le corps 8 bascule de manière à être déplacé entre la première position et la deuxième position. Le premier organe de couplage 84 et le deuxième organe de couplage 85 du premier volet 71 pivotent ensemble. Au niveau de la zone de couplage, le deuxième organe de couplage 85 du premier volet, de forme cylindrique creuse, coopère, en particulier reçoit, le premier organe de couplage 84 du deuxième volet. L'élément de butée compris dans la surface intérieure de ladite forme creuse est au contact du moyen de butée 88 compris dans le premier organe de couplage 84 du deuxième volet 72. Lorsque le premier volet 71 est déplacé, le deuxième volet 72 est entraîné, le deuxième organe de couplage 85 du premier volet 71 et le premier organe de couplage 84 du deuxième volet 72 étant ainsi configurés de sorte que lesdits volets 7 restent immobiles l'un relativement à l'autre. Le deuxième volet 72 est ainsi entraîné en mouvement par le premier volet 71, de manière à mettre en œuvre un mouvement identique. Les deux volets 7 forment ainsi un sous-ensemble de la pluralité de volets 7 compris dans une même rangée apte à être déplacé de manière unitaire. Un tel principe s'applique également lorsque plus de deux volets sont empilés le long du premier axe 100.

Ainsi, au sein de la cassette 5 selon l'invention, au moins deux volets 7 adjacents peuvent être empilés le long de la direction définie par le premier axe 100. Avantageusement, davantage de volets 7 peuvent être empilés le long de cette même direction. En outre, un tel principe peut être répété au niveau d'une ou plusieurs rangées 70 de volets 7 comprises dans la cassette 5 et s'étendant le long d'une direction orthogonale au premier axe 100. Autrement dit, le la cassette 5 peut comprendre une pluralité de sous-ensembles de volets 7 adjacents, chaque sous-ensemble comprenant au moins deux volets 7 reliés l'un à l'autre par une zone de couplage tel qu'exposé plus haut et empilés le long d'un axe qui lui est propre de manière à former une rangée distincte de celle des autres sous-ensembles. Notamment, tout ou partie des axes propres aux différentes rangées, y compris le premier axe 100, peuvent s'étendre parallèlement les uns aux autres. La cassette 5 et les volets 7 selon l'invention permettent ainsi une plus grande modularité des dispositifs de régulation d'un flux d'air, le nombre de volets 7 empilés au sein d'une rangée pouvant être adapté selon le besoin de manière simple par ajout ou retrait d'un volet.

En ce sens, des volets 7 d'une même rangée, c'est-à-dire empilés le long d'un même axe, peuvent présenter des longueurs, correspondant à une dimension du volet le long dudit axe, identiques ou distinctes. En outre, la cassette 5 peut comprendre un nombre identique ou distinct de volets 7 empilés d'une rangée à une autre. De manière alternative ou additionnelle, la cassette 5 peut être configurée pour comprendre des rangées de dimension variables ou identiques le long de la direction définie par le premier axe 100. Par exemple, le cadre 6 peut être conformé et/ou dimensionné pour recevoir un nombre prédéterminé de volets 7 selon l'invention. La figure 3 illustre un exemple non limitatif de réalisation dans lequel une rangée supérieure est destinée à recevoir un volet 7 de moins que les autres rangées de sorte qu'une zone sans volet est ici dédiée à une zone de fixation du cadre 6 à une pièce support. Selon une alternative, une zone sans volet peut être destinée à un autre besoin, par exemple un écoulement permanent d'air, une interface fonctionnelle, ou une obstruction permanente, selon le besoin de refroidissement, notamment le besoin de refroidissement d'un échangeur thermique exposé à un flux d'air de refroidissement.

Optionnellement, la dimension d'une rangée peut être adaptée par simple ajustement de la géométrie et/ou dimension d'au moins un volet 7, par exemple en modifiant la dimension du corps 8 des volets. Avantageusement, les organes de couplages demeurent identiques à ce qui a été précédemment exposé, de sorte qu'il n'est pas nécessaire de développer intégralement de nouvelles références, ce qui tend à réduire les diversités de conception.

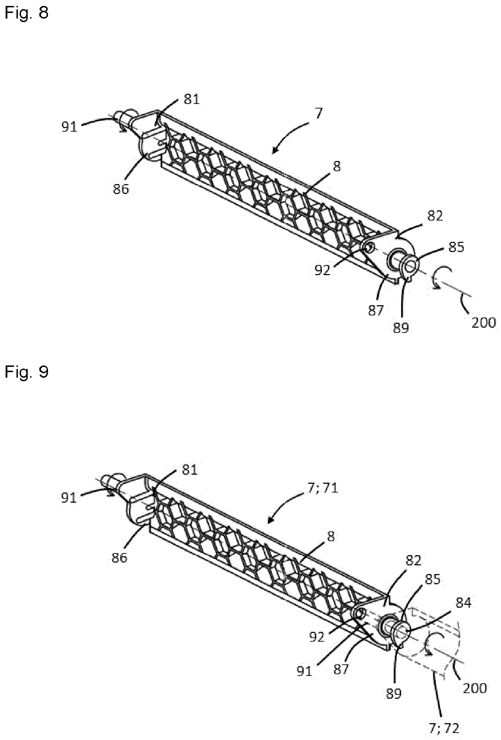

Les figures 8 à 10 illustrent un exemple de réalisation d'un deuxième mode de réalisation d'un volet selon l'invention. Le deuxième mode de réalisation est similaire à celui précédemment exposé, aussi, la description précédente s'applique-t-elle *mutatis mutandis,* en particulier relativement aux organes de couplage. Le deuxième mode de réalisation se distingue du premier en ce que la première portion extrêmale 81 de chacun des deux volets 7 adjacents comprend, en outre, au moins un premier organe de transmission 91 d'un mouvement et la deuxième portion extrêmale 82 de chacun des deux volets 7 adjacents comprend, en outre, au moins un deuxième organe de transmission 92 d'un mouvement. Le premier organe de transmission 91 et le deuxième organe de transmission 92 sont notamment complémentaires de forme de sorte que le premier organe de l'un des deux volets 7 adjacents est configuré pour coopérer avec le deuxième organe de transmission 92 de l'autre desdits deux volets 7 sans contrainte d'ordre d'assemblage.

A noter que le premier organe de couplage 84 et le deuxième organe de couplage 85 peuvent présenter des profils tels que définis précédemment, comprenant le moyen de butée 88 et l'élément de butée respectivement. Le premier organe de transmission 91 et le deuxième organe de transmission 92 participent alors à assurer la transmission de l'un des volets 7 couplés à l'autre en combinaison du premier organe de couplage 84 et du deuxième organe de couplage 85, les organes de transmission 91, 92 facilitant un tel mouvement.

Alternativement, le premier organe de couplage 84 peut présenter une forme cylindrique simple, dépourvue de moyen de butée 88, et le deuxième organe de couplage 85 peuvent présenter une forme cylindrique creuse complémentaire, configurée pour recevoir le premier organe de couplage 84. Le premier organe de transmission 91 et le deuxième organe de transmission 92 assurent alors intégralement la fonction la transmission de l'un des volets 7 couplé à l'autre.

Notamment, le premier organe de transmission 91 et le deuxième organe de transmission 92 d'un volet considéré sont traversés par un deuxième axe 200, distinct du premier axe 100. De manière particulière, le premier organe de transmission 91 et le deuxième organe de transmission 92 d'un volet considéré sont centrés sur le deuxième axe 200. Selon un exemple de réalisation, le deuxième axe 200 s'étend parallèlement, ou sensiblement parallèlement, au premier axe 100. Autrement dit, le deuxième axe 200 présente un positionnement déporté relativement au premier axe 100 et/ou à un axe défini par le pivot. Notamment, le deuxième axe 200 peut présenter un positionnement déporté relativement à l'au moins un bras 65.

Le premier organe de transmission 91 peut comprendre un pion, par exemple de forme cylindrique. Similairement au premier organe de transmission, le premier organe de transmission 91 peut être porté par la première plaque 86. Notamment, les premiers organes de transmission 91 d'au moins les deux volets 7 adjacents présentent une forme et/ou des dimensions identiques. Notamment, les deuxièmes organes de transmission 92 d'au moins les deux volets 7 adjacents présentent une forme et/ou des dimensions identiques.

Le deuxième organe de transmission 92 peut comprendre un orifice ou, selon une alternative non représentée, une cavité, configuré pour coopérer avec le premier organe de transmission 91. Optionnellement, le deuxième organe de transmission 92 peut être porté par la deuxième plaque 87. A noter que les formes du premier organe de transmission 91 et du deuxième organe de transmission 92 peuvent être inversées.

Avantageusement, les volets 7 peuvent être conformés de sorte que, lorsque la cassette 5 est installée au sein du dispositif de régulation ou de l'installation de circulation et/ou de traitement thermique d'un flux d'air, le premier axe 100 peut être interposé entre les premier organe de transmission 91 et deuxième organe de transmission 92 d'une part, et l'échangeur thermique 2 d'autre part le long d'un sens de circulation du flux d'air. Autrement dit le premier axe 100 est interposé entre le deuxième axe 200 et ledit échangeur thermique.

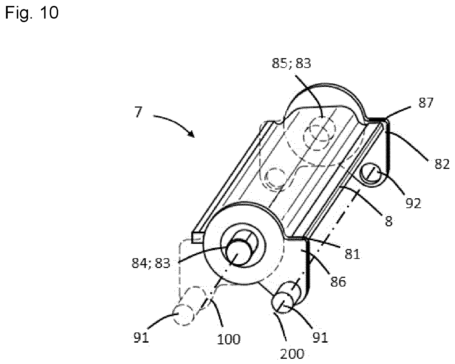

Alternativement, tel que représenté en lignes pointillées la figure 10, les volets 7 peuvent être conformés de sorte que, lorsque la cassette 5 est installée au sein du dispositif de régulation ou de l'installation de circulation et/ou de traitement thermique d'un flux d'air, les premier organe de transmission 91 et deuxième organe de transmission 92 sont interposés entre le premier axe 100 et l'échangeur thermique 2 le long du sens de circulation du flux d'air. Autrement dit le deuxième axe 200 est interposé entre le premier axe 100 et ledit échangeur thermique.

De la sorte, au moins les deux volets 7 adjacents peuvent être sélectionnés de sorte à être adaptés à des caractéristiques et/ou dimensions propres au dispositif de régulation 1 et/ou au cadre 6. Par exemple, le positionnement du premier organe de transmission 91 et du deuxième organe de transmission 92 peut être défini selon la forme et/ou la position du ou des bras 65 dans le cadre 6. Également, le positionnement du premier organe de transmission 91 et du deuxième organe de transmission 92 peut être défini en fonction de la présence ou non de moyens de blocage de particules et/ou de projections au travers du cadre 6, tels que des barreaux ou ailettes de grilles « pare-pierre » équipées aux abords de la cassette 5.

Le principe de transmission d'un mouvement de l'un à l'autre des au moins deux volets 71, 72 tel que décrit récemment s'applique *mutatis mutandis.* En l'espèce, lorsque deux volets 71, 72 adjacents sont empilés le long de la direction définie par le premier axe 100, comme précédemment, au niveau de la zone de couplage, les organes de couplage 85, 86 et/ou les organes de transmission 91, 92 reliant le premier volet 71 au deuxième volet 72 assurent que lesdits volets restent solidaires l'un de l'autre et immobiles l'un relativement à l'autre. Comme précédemment, le deuxième organe de couplage 85 du premier volet 71, de forme cylindrique creuse, coopère, en particulier reçoit, le premier organe de couplage 84 du deuxième volet 72. Également, le deuxième organe de transmission 92 du premier volet, ici un orifice compris dans la deuxième plaque 87, reçoit le premier organe de transmission 91, ceux-ci étant configurés de sorte à limiter, voire empêcher, le déplacement du premier volet 71 relativement au deuxième volet 72 le long d'au moins une direction orthogonale au premier axe 100. De manière optionnelle, les organes de couplages de la zone de couplage et les élément et moyen de butée peuvent assurer une fonction similaire. Lorsque le premier volet 71 est déplacé, le deuxième volet 72 est entraîné en mouvement par le premier volet de manière à mettre en œuvre un mouvement identique. Un tel principe s'applique également lorsque plus de deux volets 7 sont empilés le long du premier axe 100.

Ainsi, la présente invention propose une cassette comprenant une pluralité de volets pour un dispositif de régulation de la circulation d'un flux d'air, par exemple destiné à un véhicule. Une telle cassette comprend des volets amovibles avantageusement configurés pour être empilés de manière réversible le long d'une direction de manière à former une ou plusieurs rangée(s) de dimension modulable au sein desquels les volets se déplaces de manière solidaire au moins au sein d'une rangée considérée. L'invention permet avantageusement d'assurer, avec une solution simple de mise en œuvre et à faible coût, l'intégration des volets selon l'invention à des cassettes de modèles et dimensions variables.

## Revendications

1. Cassette (5) pour dispositif de régulation de la circulation d'un flux d'air d'un véhicule, la cassette (5) comprenant un cadre (6) et une pluralité de volets (7, 71, 72) mobiles disposés sur ledit cadre (6), au moins deux volets (71, 72) adjacents étant rapportés l'un relativement à l'autre et disposés à la suite l'un de l'autre le long d'un premier axe (100), lesdits deux volets (71, 72) comprenant chacun un corps (8) présentant, le long du premier axe (100), une première portion extrémale (81) et une deuxième portion extrêmale (82) opposées, ladite cassette (5) étant **caractérisée en ce que** lesdites portions extrémales opposées comprennent
respectivement un premier organe de couplage (84) et un deuxième organe de couplage (85) au moins en partie complémentaires de forme, lesdites portions extrémales (81, 82) étant configurées de sorte que les corps (8) des deux volets (71, 72) adjacents sont reliés l'un à l'autre de manière solidaire réversible au moins par couplage du premier organe de couplage (84) de l'un des deux volets (71, 72) adjacents avec le deuxième organe de couplage (85) de l'autre desdits volets (71, 72) au niveau d'une zone de couplage de sorte qu'un mouvement, notamment une rotation autour du premier axe (100), exercé sur l'un quelconque desdits deux volets (71, 72) est transmis à l'autre desdits volets (71, 72).

2. Cassette (5) selon la revendication précédente, dans laquelle le premier organe de couplage (84) et le deuxième organe de couplage (85) d'au moins l'un des deux volets (71, 72) adjacents sont centrés sur le premier axe (100).

3. Cassette (5) selon l'une des l'une des revendications précédentes, dans laquelle, au sein des deux volets (71, 72) adjacents, l'un du premier organe de couplage (84) ou du deuxième organe de couplage (85) présente une forme cylindrique comprenant au moins un moyen de butée (88) et l'autre du premier organe de couplage (84) ou du deuxième organe de couplage (85) présente une forme cylindrique creuse apte à recevoir l'un du premier organe de couplage (84) ou du deuxième organe de couplage (85), une surface intérieure de ladite forme cylindrique creuse comprenant un élément de butée, complémentaire du moyen de butée (88), configuré pour relier les deux volets (71, 72) adjacents entre eux de manière solidaire de sorte qu'un mouvement, notamment une rotation autour du premier axe (100), exercé sur l'un quelconque desdits deux volets (71, 72) est transmis à l'autre desdits volets (71, 72).

4. Cassette (5) selon l'une des revendications précédentes, dans laquelle le cadre (6) comprend, en outre, au moins un bras (65) configuré pour coopérer avec le premier organe de couplage (84) et/ou avec le deuxième organe de couplage (85) compris dans la zone de couplage reliant les deux volets (71, 72) adjacents.

5. Cassette (5) selon la revendication précédente, dans laquelle au moins l'un du premier organe de couplage (84) et/ou du deuxième organe de couplage (85) compris dans la zone de couplage comprend un rebord (89) configuré pour entrer en butée de l'au moins un bras (65) le long d'au moins un sens de la direction définie par le premier axe (100).

6. Cassette (5) selon l'une des revendications précédentes, dans laquelle la première portion extrêmale (81) de chacun des deux volets (71, 72) adjacents comprend, en outre, au moins un premier organe de transmission (91) d'un mouvement et la deuxième portion extrêmale (82) de chacun des deux volets (71, 72) adjacents comprend, en outre, au moins un deuxième organe de transmission (92) d'un mouvement, au moins le premier organe de transmission (91) de l'un des deux volets (71, 72) adjacents étant configuré pour coopérer avec le deuxième organe de transmission (92) de l'autre desdits deux volets (71, 72) au niveau de la zone de couplage.

7. Dispositif de régulation de la circulation d'un flux d'air d'un véhicule comprenant une cassette (5) selon l'une des revendications précédentes et au moins un moyen de réglage (11) de l'admission du flux d'air configuré pour déplacer, notamment par rotation autour du premier axe (100), au moins l'un des deux volets (71, 72) adjacents.

8. Volet (7) pour une cassette (5) selon l'une des revendications 1 à 6 ou pour un dispositif de régulation de la circulation d'un flux d'air d'un véhicule selon la revendication 7, **caractérisé en ce que** le volet comprend un corps (8) s'étendant le long d'un premier axe (100) et présentant le long dudit axe, une première portion extrémale (81) et une deuxième portion extrêmale (82) opposées, la première portion extrêmale (81) comprenant un premier organe de couplage (84), configuré pour lier le corps (8) à un volet adjacent disposé le long du premier axe (100) de manière solidaire réversible, la deuxième portion extrêmale (82) comprenant un deuxième organe de couplage (85) au moins en partie complémentaire de forme du premier organe de couplage (84), configuré pour coopérer avec un premier organe de couplage (84) d'un volet adjacent disposé le long du premier axe (100), le premier organe de couplage (84) et/ou le deuxième organe de couplage (85) étant notamment centrés sur le premier axe (100).

9. Volet (7) selon la revendication précédente, dans lequel la première portion extrêmale (81) comprend en outre au moins un premier organe de transmission (91) d'un mouvement et la deuxième portion extrêmale (82) comprend, en outre, au moins un deuxième organe de transmission (92), le premier organe de transmission (91) étant configuré pour coopérer avec un deuxième organe de transmission (92) d'un volet adjacent disposé le long du premier axe (100) et le deuxième organe de transmission (92) étant configuré pour coopérer avec un premier organe de transmission (91) d'un volet adjacent disposé le long du premier axe (100), le premier organe de transmission (91) et le deuxième organe de transmission (92) étant centrés sur un deuxième axe (200), distinct du premier axe (100).

10. Installation de circulation et/ou de traitement thermique d'un flux d'air **caractérisée en ce qu'**elle comprend un dispositif de régulation de la circulation d'un flux d'air selon la revendication 7 et/ou au moins une cassette (5) selon l'une des revendications 1 à 6 et/ou au moins un volet (7) selon la revendication 8 ou 9.

11. Installation selon la revendication précédente, **caractérisée en ce qu'**elle comprend plusieurs rangées de volets (7), notamment plusieurs rangées horizontales de volets, et **en ce qu'**au moins un volet (7) d'une rangée de volets est de géométrie différente à celle d'au moins un autre volet de la rangée ou d'au moins un volet d'une rangée adjacente.

12. Véhicule automobile comprenant un dispositif de régulation de la circulation d'un flux d'air selon la revendication 7 et/ou une installation selon la revendication 10 ou 11.

## Patentansprüche

1. Kassette (5) für eine Vorrichtung zur Regelung der Zirkulation eines Luftstroms in einem Fahrzeug, wobei die Kassette (5) einen Rahmen (6) und eine Vielzahl von beweglichen Klappen (7, 71, 72) umfasst, die an dem Rahmen (6) angeordnet sind, wobei mindestens zwei benachbarte Klappen (71, 72) relativ zueinander versetzt und entlang einer ersten Achse (100) hintereinander angeordnet sind, wobei die beiden Klappen (71, 72) jeweils einen Körper (8) umfassen, der entlang der ersten Achse (100) einen ersten Endabschnitt (81) und einen zweiten Endabschnitt (82) aufweist, die einander gegenüberliegen, wobei die Kassette (5) **dadurch gekennzeichnet ist, dass** die einander gegenüberliegenden Endabschnitte jeweils ein erstes Kopplungselement (84) und ein zweites Kopplungselement (85) umfassen, die mindestens teilweise formkomplementär sind, wobei die Endabschnitte (81, 82) so konfiguriert sind, dass die Körper (8) der beiden benachbarten Klappen (71, 72) mindestens durch Kopplung des ersten Kopplungselements (84) einer der beiden benachbarten Klappen (71, 72) mit dem zweiten Kopplungselement (85) der anderen der Klappen (71, 72) im Bereich einer Kopplungszone lösbar fest verbunden sind, so dass eine Bewegung, insbesondere eine Drehung um die erste Achse (100), die auf eine beliebige der beiden Klappen (71, 72) ausgeübt wird, auf die andere der genannten Klappen (71, 72) übertragen wird.

2. Kassette (5) nach dem vorhergehenden Anspruch, wobei das erste Kopplungselement (84) und das zweite Kopplungselement (85) mindestens einer der beiden benachbarten Klappen (71, 72) auf der ersten Achse (100) zentriert sind.

3. Kassette (5) nach einem der vorhergehenden Ansprüche, wobei innerhalb der beiden benachbarten Klappen (71, 72) entweder das erste Kopplungselement (84) oder das zweite Kopplungselement (85) eine zylindrische Form, umfassend mindestens ein Anschlagmittel (88), umfasst und das andere des ersten Kopplungselements(84) oder des zweiten Kopplungselements (85) eine hohlzylindrische Form umfasst, die dazu geeignet ist, das erste Kopplungselement (84) oder das zweite Kopplungselement (85) aufzunehmen, wobei eine Innenoberfläche der hohlzylindrischen Form eine Anschlagkomponente umfasst, die komplementär zu dem Anschlagmittel (88) ist und so konfiguriert ist, dass sie die beiden benachbarten Klappen (71, 72) fest miteinander verbindet, sodass eine Bewegung, insbesondere eine Drehung um die erste Achse (100), die auf eine der beiden Klappen (71, 72) ausgeübt wird, auf die andere der Klappen (71, 72) übertragen wird.

4. Kassette (5) nach einem der vorhergehenden Ansprüche, wobei der Rahmen (6) ferner mindestens einen Arm (65) umfasst, der so konfiguriert ist, dass er mit dem ersten Kopplungselement (84) und/oder mit dem zweiten Kopplungselement (85) zusammenwirkt, die in der die beiden benachbarten Klappen (71, 72) verbindenden Kopplungszone umfasst sind.

5. Kassette (5) nach dem vorhergehenden Anspruch, wobei mindestens eines des ersten Kopplungselements (84) und/oder des zweiten Kopplungselements (85), das in der Kopplungszone umfasst ist, einen Rand (89) umfasst, der so konfiguriert ist, dass er an dem mindestens einen Arm (65) entlang mindestens einer Richtung der durch die erste Achse (100) definierten Richtung anschlägt.

6. Kassette (5) nach einem der vorhergehenden Ansprüche, wobei der erste Endabschnitt (81) jeder der beiden benachbarten Klappen (71, 72) ferner mindestens ein erstes Element zur Übertragung (91) einer Bewegung umfasst und der zweite Endabschnitt (82) jeder der beiden benachbarten Klappen (71, 72) darüber hinaus mindestens ein zweites Element zur Übertragung (92) einer Bewegung umfasst, wobei mindestens das erste Element zur Übertragung (91) einer der beiden benachbarten Klappen (71, 72) so konfiguriert ist, dass es mit dem zweiten Element zur Übertragung (92) der anderen der beiden Klappen (71, 72) im Bereich der Kopplungszone zusammenwirkt.

7. Vorrichtung zur Regelung der Zirkulation des Luftstroms in einem Fahrzeug, umfassend eine Kassette (5) nach einem der vorhergehenden Ansprüche und mindestens ein Mittel zur Regelung (11) des Luftstromeinlasses, das so konfiguriert ist, dass es insbesondere durch Drehung um die erste Achse (100) mindestens eine der beiden benachbarten Klappen (71, 72) verschiebt.

8. Klappe (7) für eine Kassette (5) nach einem der Ansprüche 1 bis 6 oder für eine Vorrichtung zur Regelung der Zirkulation des Luftstroms in einem Fahrzeug nach Anspruch 7, **dadurch gekennzeichnet, dass** die Klappe einen Körper (8) umfasst, der sich entlang einer ersten Achse (100) erstreckt und entlang dieser Achse einen ersten Endabschnitt (81) und einen zweiten Endabschnitt (82) aufweist, die einander gegenüberliegen, wobei der erste Endabschnitt (81) ein erstes Kopplungselement (84) umfasst, das so konfiguriert ist, dass es den Körper (8) mit einer benachbarten Klappe, die entlang der ersten Achse (100) angeordnet ist, lösbar fest verbindet, wobei der zweite Endabschnitt (82) ein zweites Kopplungselement (85) umfasst, das mindestens teilweise formkomplementär zu dem ersten Kopplungselement (84) ist und so konfiguriert ist, dass es mit einem ersten Kopplungselement (84) einer benachbarten Klappe zusammenwirkt, die entlang der ersten Achse (100) angeordnet ist, wobei das erste Kopplungselement (84) und/oder das zweite Kopplungselement (85) insbesondere auf der ersten Achse (100) zentriert sind.

9. Klappe (7) nach dem vorhergehenden Anspruch, wobei der erste Endabschnitt (81) ferner mindestens ein erstes Element zur Übertragung (91) einer Bewegung umfasst und der zweite Endabschnitt (82) ferner mindestens ein zweites Element zur Übertragung (92) umfasst, wobei das erste Element zur Übertragung (91) so konfiguriert ist, dass es mit einem zweiten Element zur Übertragung (92) einer benachbarten Klappe zusammenwirkt, die entlang der ersten Achse (100) angeordnet ist, und das zweite Element zur Übertragung (92) so konfiguriert ist, dass es mit einem ersten Element zur Übertragung (91) einer benachbarten Klappe zusammenwirkt, die entlang der ersten Achse (100) angeordnet ist, wobei das erste Element zur Übertragung (91) und das zweite Element zur Übertragung (92) auf einer zweiten Achse (200) zentriert sind, die sich von der ersten Achse (100) unterscheidet.

10. Anlage zur Zirkulation und/oder thermischen Behandlung eines Luftstroms, **dadurch gekennzeichnet, dass** sie eine Vorrichtung zur Regelung der Zirkulation eines Luftstroms nach Anspruch 7 und/oder mindestens eine Kassette (5) nach einem der Ansprüche 1 bis 6 und/oder mindestens eine Klappe (7) nach Anspruch 8 oder 9 umfasst.

11. Anlage nach dem vorhergehenden Anspruch, **dadurch gekennzeichnet, dass** sie mehrere Reihen von Klappen (7), insbesondere mehrere horizontale Reihen von Klappen, umfasst und dass mindestens eine Klappe (7) einer Reihe von Klappen eine andere Geometrie aufweist als mindestens eine andere Klappe der Reihe oder mindestens eine Klappe einer benachbarten Reihe.

12. Kraftfahrzeug, umfassend eine Vorrichtung zur Regelung der Zirkulation des Luftstroms nach Anspruch 7 und/oder eine Anlage nach Anspruch 10 oder 11.

## Claims

1. Cassette (5) for a device for controlling the circulation of an air flow of a vehicle, the cassette (5) comprising a frame (6) and a plurality of movable shutters (7, 71, 72) arranged on said frame (6), at least two adjacent shutters (71, 72) being attached to each other and arranged one after the other along a first axis (100), each of said two shutters (71, 72) comprising a body (8) having, along the first axis (100), a first end portion (81) and a second end portion (82) opposite each other, said cassette (5) being **characterized in that** said opposite end portions comprise respectively a first coupling member (84) and a second coupling member (85) that are at least partially complementary in shape, said end portions (81, 82) being configured so that the bodies (8) of the two adjacent shutters (71, 72) are connected to each other integrally and reversibly at least by coupling the first coupling member (84) of one of the two adjacent shutters (71, 72) to the second coupling member (85) of the other of said shutters (71, 72) in a coupling zone such that a movement, notably a rotation about the first axis (100), exerted on either one of said two shutters (71, 72) is transmitted to the other of said shutters (71, 72).

2. Cassette (5) according to the preceding claim, wherein the first coupling member (84) and the second coupling member (85) of at least one of the two adjacent shutters (71, 72) are centred on the first axis (100).

3. Cassette (5) according to either of the preceding claims, wherein, within the two adjacent shutters (71, 72), either the first coupling member (84) or the second coupling member (85) has a cylindrical shape comprising at least one stop means (88) and the other of the first coupling member (84) and the second coupling member (85) has a hollow cylindrical shape able to receive either the first coupling member (84) or the second coupling member (85), an inner surface of said hollow cylindrical shape comprising a stop element, complementary to the stop means (88), configured to connect the two adjacent shutters (71, 72) together integrally such that a movement, notably a rotation about the first axis (100), exerted on either one of said two shutters (71, 72) is transmitted to the other of said shutters (71, 72).

4. Cassette (5) according to one of the preceding claims, wherein the frame (6) further comprises at least one arm (65) configured to cooperate with the first coupling member (84) and/or with the second coupling member (85) within the coupling zone connecting the two adjacent shutters (71, 72).

5. Cassette (5) according to the preceding claim, wherein at least one of the first coupling member (84) and/or the second coupling member (85) within the coupling zone comprises a flange (89) configured to butt against the at least one arm (65) in at least one or the other of the directions defined by the first axis (100).

6. Cassette (5) according to one of the preceding claims, wherein the first end portion (81) of each of the two adjacent shutters (71, 72) further comprises at least one first member (91) for transmitting a movement and the second end portion (82) of each of the two adjacent shutters (71, 72) further comprises at least one second member (92) for transmitting a movement, at least the first transmission member (91) of one of the two adjacent shutters (71, 72) being configured to cooperate with the second transmission member (92) of the other of said two shutters (71, 72) in the coupling zone.

7. Device for controlling the circulation of an air flow of a vehicle comprising a cassette (5) according to one of the preceding claims and at least one means (11) for adjusting the intake of the air flow configured to move, notably by rotation about the first axis (100), at least one of the two adjacent shutters (71, 72).

8. Shutter (7) for a cassette (5) according to one of Claims 1 to 6 or for a device for controlling the circulation of an air flow of a vehicle according to Claim 7, **characterized in that** the shutter comprises a body (8) extending along a first axis (100) and having, along said axis, a first end portion (81) and a second end portion (82) that are opposite each other, the first end portion (81) comprising a first coupling member (84) configured to connect the body (8) to an adjacent shutter arranged along the first axis (100) integrally and reversibly, the second end portion (82) comprising a second coupling member (85), at least partially complementary in shape to the first coupling member (84), configured to cooperate with a first coupling member (84) of an adjacent shutter arranged along the first axis (100), the first coupling member (84) and/or the second coupling member (85) notably being centred on the first axis (100).

9. Shutter (7) according to the preceding claim, wherein the first end portion (81) further comprises at least one first member (91) for transmitting a movement and the second end portion (82) further comprises at least one second transmission member (92), the first transmission member (91) being configured to cooperate with a second transmission member (92) of an adjacent shutter arranged along the first axis (100) and the second transmission member (92) being configured to cooperate with a first transmission member (91) of an adjacent shutter arranged along the first axis (100), the first transmission member (91) and the second transmission member (92) being centred on a second axis (200), distinct from the first axis (100).

10. Installation for circulating and/or heat treating an air flow, **characterized in that** it comprises a device for controlling the circulation of an air flow according to Claim 7 and/or at least one cassette (5) according to one of Claims 1 to 6 and/or at least one shutter (7) according to Claim 8 or 9.

11. Installation according to the preceding claim, **characterized in that** it comprises several rows of shutters (7), notably several horizontal rows of shutters, and **in that** the geometry of at least one shutter (7) of a row of shutters is different to the geometry of at least one other shutter of the row or of at least one shutter of an adjacent row.

12. Motor vehicle comprising a device for controlling the circulation of an air flow according to Claim 7 and/or an installation according to Claim 10 or 11.
